# DEMANDE DE BREVET EUROPEEN

(11) **EP 1 205 266 A1**
(43) Date de publication de la demande: **15.05.2002**
(21) Numéro de dépôt: 01402869.0
(22) Date de dépôt: 08.11.2001
(51) Int. Cl.: B07C 3/08, B65G 1/04, B65G 37/02

(54) **Procédé et dispositif pour le tri d'objets au moyen de transporteurs linéaires à parcours croisés**

(30) Priorité: 08.11.2000 FR 0014357
(71) Demandeur: Chronopost Société Anonyme, 92130 Issy Les Moulineaux (FR)
(72) Inventeur: Triole, Pascal Georges Christian, 92600 Asnières sur Seine (FR)
(74) Mandataire: Rataboul, Michel Charles

(57) **Abrégé**

L'invention concerne un procédé et une installation pour le tri, le déplacement et la répartition individuelle d'objets originellement mélangés, selon lequel on transfère les objets depuis un point d'entrée commun jusqu'à un point de sortie spécifique, au moyen d'au moins un transporteur.

L'installation est caractérisé en ce qu'elle est de type maillé, à savoir qu'elle comprend au moins un module formé d'une part de transporteurs à déplacement linéaire (11-14 et 21-24) situés à deux niveaux différents et à parcours indépendants, croisés et superposés, et d'autre part des dispositifs d'aiguillage en profondeur dits « valves » (40) possédant chacun un segment de transporteur (41) de niveau supérieur (11-14) qui est monté mobile transversalement entre une position haute dans laquelle il est dans le plan dudit transporteur (11-14), et une position basse dans laquelle il est incliné d'amont en aval depuis le transporteur de niveau supérieur (11-14) jusqu'à proximité d'un transporteur de niveau inférieur (21-24), chaque transporteur de niveau inférieur (21-24) aboutissant à un répartiteur de sortie (31-34) à plusieurs canaux (35), et en ce qu'un transporteur d'entrée (51-54) pour les objets mélangés comprend des moyens de repérage et/ou d'identification de chaque objet afin de déterminer d'une part celui des canaux de sortie auquel il est destiné, et d'autre part un parcours spécifique en fonction de son rang de sortie optimum.

## Description

Les installations de tri, de déplacement et de répartition d'objets originellement mélangés sont réalisées essentiellement selon deux principes cinématiques : linéaire et en carrousel.

Selon le principe linéaire, un transporteur est raccordé à au moins une entrée amont et à plusieurs sorties aval correspondant chacune à une destination des objets.

Selon le principe du carrousel, le transporteur a un parcours fermé sur lui-même et est raccordé généralement à plusieurs entrées et à des répartiteurs ayant autant de canaux que de destinations possibles.

Dans un cas comme dans l'autre, les transporteurs, leurs entrées et leurs sorties communiquent et sont donc dans un même plan de travail indépendamment du fait que les structures qui portent les transporteurs puissent être inclinées, droites, courbes, obliques montantes ou descendantes.

Il ne peut donc pas exister plusieurs parcours différents pour un objet entré et dirigé vers une destination donnée. En conséquence, il est impossible d'établir des priorités entre les objets entrés, ceux-ci devant sortir dans l'ordre de leur arrivée.

En raison de la concentration des objets sur un seul transporteur, on recherche un débit élevé qui est la cause d'une vulnérabilité de l'installation à des incidents de fonctionnement parfois graves.

Le principe même d'une telle installation la rend inapte à être adaptée à des sites d'importance faible ou moyenne, c'est-à-dire aussi à des faibles trafics.

De même, ces installations sont difficiles à adapter à des locaux anciens, d'autant que ne reposant pas sur un module combinable à d'autres similaires, elles sont réalisées cas par cas et leur rigidité de conception leur interdit toute adaptation à un accroissement de trafic autre que celle qui consiste à construire une seconde installation qui, à son tour, est porteuse de rigidité et d'inertie, l'ensemble étant alors inadapté à une modulation à un trafic inférieur ou supérieur.

A ces graves défauts de structure, il faut ajouter l'inadaptation des matériels existants au fret moderne confié aux postes et messageries express, ce fret comprenant tout aussi bien des séries de petites boîtes d'échantillons, qu'un long tube, une lourde caisse ou des sous-ensembles mécaniques constituant des pièces de rechange et, bien entendu, des enveloppes et autres objets plats.

Le brevet FR 2 593 416 décrit une installation de tri comportant des courroies de convoyage disposées l'une au-dessus de l'autre et en travers. L'installation comporte en outre un ensemble formé par :
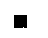 une courroie de sélection inclinée s'étendant entre les premières et secondes courroies,
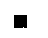 un rouleau de basculement monté fou,
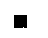 une courroie de déviation,
de manière qu'un colis qui passe des premières aux secondes courroies passe sur le rouleau puis sur la courroie de déviation, soit vers la gauche, soit vers la droite.

Le but de cette installation très spécifique est de maintenir constamment la position initiale des colis par rapport à leur sens d'avance frontale, afin de ne pas compliquer la lecture des marquages spéciaux qui sont apposés sur chacun des colis.

La présente invention propose une solution différente de celles qui existent et qui permet non seulement une adaptabilité très souple aux conditions structurelles d'exploitation mais également une très grande liberté de traitement individuel des objets, notamment vis-à-vis de la gestion des priorités et des urgences.

A cette fin, l'invention a pour objet un procédé pour le tri, le déplacement et la répartition individuelle d'objets originellement mélangés, selon lequel on transfère les objets depuis un point d'entrée commun jusqu'à un point de sortie spécifique, au moyen d'au moins un transporteur, caractérisé en ce que :
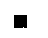 l'on déplace les objets d'une part selon des parcours linéaires substantiellement horizontaux situés à des niveaux différents et ayant des axes croisés, et d'autre part selon des plans inclinés s'étendant temporairement, et spécifiquement pour un objet déterminé ou pour plusieurs objets déterminés successifs, d'un parcours d'un niveau supérieur à un parcours d'un niveau inférieur ;
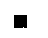 on extrait un à un les objets en parcours au droit de l'un de plusieurs points de sortie proches les uns des autres ;
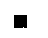 immédiatement après le point d'entrée, on repère chaque objet selon des critères dont l'un au moins est une fonction du temps, afin de déterminer d'une part celui des points de sortie auquel l'objet est destiné, et d'autre part son parcours spécifique qui est fonction du rang de sortie de chaque objet par rapport aux autres encore en parcours.

L'invention a également pour objet une installation pour le tri, le déplacement et la répartition individuelle d'objets originellement mélangés, comprenant au moins un transporteur et un répartiteur de sortie comprenant plusieurs canaux de sortie, caractérisé en ce qu'elle est de type maillé, à savoir qu'elle comprend au moins un module formé d'une part de transporteurs à déplacement linéaire situés à deux niveaux différents et à parcours indépendants, croisés et superposés, et d'autre part des dispositifs d'aiguillage en profondeur dits « valves » possédant chacun un segment de transporteur de niveau supérieur qui est monté mobile transversalement entre une position haute dans laquelle il est dans le plan dudit transporteur, et une position basse dans laquelle il est incliné d'amont en aval depuis le transporteur de niveau supérieur jusqu'à proximité d'un transporteur de niveau inférieur, chaque transporteur de niveau inférieur aboutissant à un répartiteur de sortie à plusieurs canaux et en ce qu'un transporteur d'entrée pour les objets mélangés comprend des moyens de repérage et/ou d'identification de chaque objet afin de déterminer d'une part celui des canaux de sortie auquel il est destiné, et d'autre part un parcours spécifique en fonction de son rang de sortie optimum.

D'autres caractéristiques de l'invention apparaîtront de la description détaillée ci-après faite en référence au dessin annexé. Bien entendu, la description et le dessin ne sont donnés qu'à titre d'exemple indicatif et non limitatif.

La figure 1 est une vue schématique montrant une installation conforme à l'invention, comprenant quatre transporteurs parallèles de niveau supérieur et quatre transporteurs perpendiculaires aux précédents et de niveau inférieur, aboutissant chacun à un dispositif de répartition.

Les figures 2 et 3 sont deux vues schématiques en coupe transversale montrant deux transporteurs de niveaux différents et illustrant le fonctionnement d'une valve.

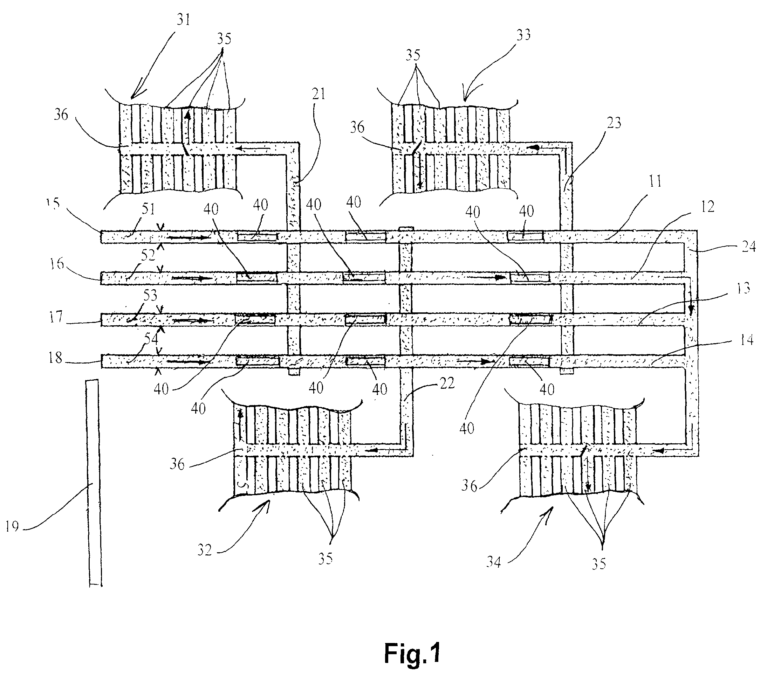

En se reportant à la figure 1, on voit qu'une installation conforme à l'invention comprend d'une part des transporteurs linéaires 11, 12, 13 et 14 dits ici « longitudinaux », parallèles et n'ayant aucune communication entre eux, et d'autre part trois transporteurs linéaires 21, 22 et 23 dits ici « transversaux », parallèles et n'ayant aucune communication entre eux.

Les transporteurs transversaux 21, 22 et 23 sont situés à un niveau inférieur à celui des transporteurs longitudinaux 11, 12, 13 et 14 et aboutissent chacun à un dispositif de répartition respectivement 31,32 et 33 munis chacun de couloirs, plans inclinés ou transporteurs 35 de tout type connu.

Les extrémités 15, 16, 17 et 18 des transporteurs longitudinaux constituent autant de points d'entrées dans l'installation pour les objets à trier, les transporteurs longitudinaux 11, 12, 13 et 14 ayant un sens de déplacement de gauche à droite sur la figure 1, comme cela est indiqué par des flèches.

En amont de la zone des transporteurs longitudinaux 11, 12, 13 et 14 qui se trouve à l'aplomb des transporteurs transversaux 21, 22 et 23, se trouvent des « aiguillages en profondeur » 40, c'est-à-dire des dispositifs ayant une partie mobile 41 permettant de transférer des objets des transporteurs longitudinaux 11, 12, 13 et 14 de niveau supérieur aux transporteurs transversaux 21, 22 et 23 de niveau inférieur.

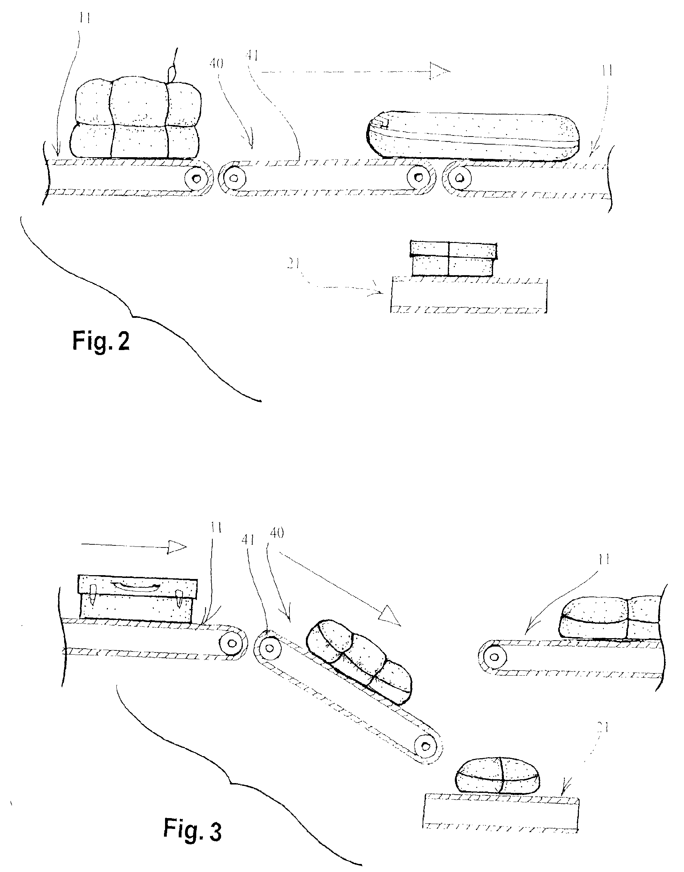

Ces dispositifs sont illustrés par les figures 2 et 3, mais il doit être bien compris que l'invention ne concerne pas leur structure même, car ils sont en soi bien connus de l'Homme de Métier.

En revanche, leur utilisation systématique permet de constituer un ensemble complètement maillé, c'est-à-dire composé (et non pas *comprenant*) de transporteurs croisés à des niveaux différents, au lieu des ensembles connus comprenant des transporteurs à embranchements directs, dans un même plan de circulation des objets.

Cette explication signifie que des transporteurs peuvent avoir des segments décalés angulairement ascendants, horizontaux, descendants, etc. sans changer le principe de la coplanéité des embranchements car ces derniers sont directement connectés aux transporteurs et contribuent à créer des ensembles arborescents, toujours ramifiés et offrant aux objets plusieurs entrées et/ou sorties selon des plans raccordés entre eux.

Certes, les valves des figures 2 et 3 font partie des dispositifs mis à la disposition de l'Homme de Métier qui sait donc aiguiller des objets entre deux niveaux différents, selon que la partie mobile 41 est laissée dans le plan du transporteur supérieur dont il constitue un segment (figure 2) où qu'elle est abaissée pour diriger un ou plusieurs objets de suite non plus au même niveau, en continuation du transporteur supérieur (ici 11) mais vers le bas, à proximité et au-dessus d'un transporteur inférieur (ici 21) sur lequel ils aboutissent.

Cependant, avec les installations connues les valves sont utilisées de manière occasionnelle, auxiliaire, par rapport au principe de l'installation tout entière, alors que l'invention permet de réaliser un procédé qui met en oeuvre une structure tout à fait différente, aucun transporteur ne possédant d'embranchement.

Comme on le comprend en observant la figure 1, il est possible de déposer tous les objets à traiter à un point d'entrée quelconque 15, 16, 17 ou 18, quel que soit l'ordre d'arrivée, puisque le transporteur longitudinal correspondant croise le parcours de tous les transporteurs transversaux, de sorte qu'il n'y a aucune spécialisation des transporteurs longitudinaux.

Si et quand le débit des objets à l'entrée augmente, on peut utiliser un, deux ou trois autres transporteurs longitudinaux pour augment d'autant la capacité de tri, mais sans aucunement les surcharger individuellement, car il est avantageux de mettre en marche de manière progressive plusieurs transporteurs longitudinaux de faible débit (12 500 objets / heure).

Naturellement, une installation de huit transporteurs longitudinaux a une plus grande capacité qu'une installation qui n'en a que quatre, mais il s'agit là de calibrer l'installation en elle-même pour la rendre apte à traiter les débits maxima.

A partir d'un débit faible, il est possible d'effectuer une montée en charge progressive, transporteur par transporteur, car tout objet déposé à un point d'arrivée quelconque, peut atteindre n'importe quel dispositif de tri 31, 32 ou 33, indépendamment de son ordre d'arrivée et quel que soit le transporteur longitudinal.

On sait que l'exploitation des installations existantes prévoit presque toujours des transporteurs spécialisés : objets plats, livraisons urgentes, etc., ce qui n'est pas le cas de l'installation conforme à l'invention, de sorte que l'on évite une concentration aux entrées et aux sorties, les augmentations de débit étant absorbées par un ou plusieurs transporteurs mis en service à la demande.

L'absence de concentration permet de concevoir des transporteurs longitudinaux et transversaux à faible débit, ce qui les rend moins sollicités et moins exigeants pour leur entretien et leur maintenance et également moins vulnérables aux pannes.

La conception d'une installation conforme à l'invention au moyen de modules permet une adaptation facile à tous les locaux existants, quelle que soit leur configuration au sol et en hauteur, car il est possible d'étager l'installation sur plusieurs niveaux.

Selon une caractéristique de l'invention, on procède à une opération auxiliaire pour permettre à des objets très différents les uns des autres d'être traités par une seule et même installation.

Les transporteurs linéaires à tablier, à rouleaux ou même à bande sans fin sont inadaptés au transport d'objets plats et minces tels que des enveloppes car ils sont susceptibles de se coincer ou de s'introduire sous les rouleaux ou tout simplement de tomber du transporteur.

Or, de tels transporteurs sont particulièrement bien adaptés à la mise en oeuvre de l'invention, notamment pour le tri des objets devant être expédiés par poste ou messagerie, mais ces objets ont des formes, des volumes et des poids très différents. Les transporteurs linéaires et les valves fonctionnent parfaitement pour des objets épais mais non pour des objets minces.

On prévoit alors un tri préalable de ces objets plats, on les conditionne dans des contenants de volume convenable, groupés par destination, de sorte que ces objets plats sont finalement traités comme les colis, paquets et autres objets volumineux.

Cette opération de pré-tri est réalisée à proximité des entrées 15, 16, 17 et 18, à un emplacement schématisé sur la figure 1 par un simple rectangle 19, les contenants et les objets plats qu'ils contiennent étant introduits dans l'installation par l'une quelconque des entrées 15 à 18.

L'installation dans son ensemble est contrôlée par des moyens informatiques, afin de commander les moteurs des transporteurs et les mécanismes des valves 40 sélectivement selon les objets considérés individuellement.

Pour repérer chaque objet, on prévoit des segments spécialisés 51, 52, 53 et 54 qui sont situés en tête des transporteurs longitudinaux 11, 12, 13 et 14 et qui sont munis de dispositifs de repérage d'index individuels préexistants sur chaque objet, ou bien de dispositifs de pose de tels index (par exemple du genre code à barres) en fonction de l'identification visuelle ou automatique de mentions écrites.

Les index peuvent être couplés à des mentions en clair, notamment sur des étiquettes de routage appliquées manuellement ou automatiquement sur chaque objet.

Les index sont mis en mémoire et pris en charge par un logiciel de commande, qui gère l'état de fonctionnement et le positionnement des transporteurs et des valves, pour agir à temps sur les différents mécanismes, afin que chaque objet suive le parcours qui lui est spécifique.

En particulier, les index comprennent un code d'urgence et l'objet correspondant est conduit vers le répartiteur de sortie dans un délai plus ou moins long selon l'urgence détectée.

En effet, dès lors que l'on peut utiliser des transporteurs longitudinaux indépendants, il est possible de gérer les urgences et d'attribuer des priorités de sortie indépendamment de l'ordre d'arrivée.

Il est donc possible pour un objet de rattraper et de dépasser des objets déjà en mouvement sur un autre transporteur.

Pour cela, les transporteurs longitudinaux peuvent avoir des vitesses différentes, ou bien les mêmes destinations se trouvent sur deux répartiteurs distincts, ou plus, de sorte que le parcours et le temps de séjour dans l'installation peuvent varier d'un objet à un autre.

Il est clair en effet qu'un objet passant du transporteur longitudinal 11 au transporteur transversal 21 atteindra le répartiteur 31 plus vite qu'un objet passant du transporteur longitudinal 12 au transporteur transversale 23 aboutissant au répartiteur 33.

Il est donc possible d'affecter les deux répartiteurs 31 et 33 aux mêmes destinations mais l'un pour les objets urgents et l'autre pour les objets normaux.

Sur la figure 1, on observe qu'il existe un quatrième transporteur transversal 24 que l'on n'a pas encore décrit car il peut être différent des précédents 21 à 23, étant donné que tous les transporteurs longitudinaux 11 à 14 le rejoignent nécessairement. Il n'est donc pas nécessaire de prévoir des valves 40 au-delà de celles qui correspondent au transporteur transversal 23, de sorte que le transporteur transversal 24 peut être situé au même niveau que celui des transporteurs longitudinaux et non plus à un niveau inférieur.

Il aboutit, lui aussi, à un répartiteur 34 du même type que les autres, qui sont munis de mécanismes connus en soi pour pousser les objets un par un vers l'un quelconque des couloirs, plans inclinés ou transporteurs, à partir d'un transporteur central 36.

UN même répartiteur peut donc comprendre deux couloirs (ou plus) correspondant à une même destination, mais destinés à des objets plus ou moins urgents.

Il ressort de la description ci-dessus que l'invention permet de réaliser des installations modulaires et donc extensibles sans modification de la configuration de base correspondant à un ou plusieurs modules, à des prix raisonnables puisque le matériel utilisé est de conception simple, de même que la gestion informatique.

## Revendications

1. Procédé pour le tri, le déplacement et la répartition individuelle d'objets originellement mélangés, selon lequel on transfère les objets depuis un point d'entrée commun jusqu'à un point de sortie spécifique, au moyen d'au moins un transporteur, **caractérisé en ce que** :
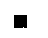 l'on déplace les objets d'une part selon des parcours linéaires substantiellement horizontaux situés à des niveaux différents et ayant des axes croisés, et d'autre part selon des plans inclinés s'étendant temporairement, et spécifiquement pour un objet déterminé ou pour plusieurs objets déterminés successifs, d'un parcours d'un niveau supérieur à un parcours d'un niveau inférieur ;
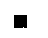 on extrait un à un les objets en parcours au droit de l'un de plusieurs points de sortie proches les uns des autres ;
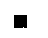 immédiatement après le point d'entrée, on repère chaque objet selon des critères dont l'un au moins est une fonction du temps, afin de déterminer d'une part celui des points de sortie auquel l'objet est destiné, et d'autre part son parcours spécifique qui est fonction du rang de sortie de chaque objet par rapport aux autres encore en parcours.

2. Installation pour le tri, le déplacement et la répartition individuelle d'objets originellement mélangés, comprenant au moins un transporteur et un répartiteur de sortie comprenant plusieurs canaux de sortie, **caractérisé en ce qu**'elle est de type maillé, à savoir qu'elle comprend au moins un module formé d'une part de transporteurs à déplacement linéaire (11-14 et 21-24) situés à deux niveaux différents et à parcours indépendants, croisés et superposés, et d'autre part des dispositifs d'aiguillage en profondeur dits « valves » (40) possédant chacun un segment de transporteur (41) de niveau supérieur (11-14) qui est monté mobile transversalement entre une position haute dans laquelle il est dans le plan dudit transporteur (11-14), et une position basse dans laquelle il est incliné d'amont en aval depuis le transporteur de niveau supérieur (11-14) jusqu'à proximité d'un transporteur de niveau inférieur (21-24), chaque transporteur de niveau inférieur (21-24) aboutissant à un répartiteur de sortie (31-34) à plusieurs canaux (35), et en ce qu'un transporteur d'entrée (51-54) pour les objets mélangés comprend des moyens de repérage et/ou d'identification de chaque objet afin de déterminer d'une part celui des canaux de sortie auquel il est destiné, et d'autre part un parcours spécifique en fonction de son rang de sortie optimum.

3. Installation selon la revendication 2, **caractérisée en ce qu**'elle comprend plusieurs modules, à savoir plusieurs transporteurs linéaires de niveau supérieur dits « longitudinaux » (11-14) et plusieurs transporteurs linéaires de niveau inférieur dits «transversaux» (21-24), ceux-ci s'étendant continûment sur toute la largeur occupée par les transporteurs longitudinaux (11-14), afin que ceux-ci puissent tous communiquer avec tous les transporteurs transversaux (21-24), au moyen des dispositifs d'aiguillage en profondeur (40).

4. Installation selon la revendication 2, **caractérisée en ce qu**'elle comprend des transporteurs auxiliaires, notamment pour la desserte des objets en amont du point d'entrée et en aval des points de sortie.

5. Installation selon la revendication 4, **caractérisée en ce qu**'étant destinée au tri d'objets devant être transportés par poste ou messagerie, elle comprend un poste de groupage (19) des enveloppes et autres objets plats dans des contenants destinés à être introduits dans l'installation comme des objets courants non plats.
